# EUROPÄISCHE PATENTSCHRIFT

(11) **EP 1 391 084 B1**
(45) Veröffentlichungstag und Bekanntmachung des Hinweises auf die Patenterteilung: **14.12.2005**
(21) Anmeldenummer: 02735076.8
(22) Anmeldetag: 22.05.2002
(51) Int. Cl.: H04L 12/28

(54) **Verfahren zum betreiben eines Netzwerks mit drahtloser Datenübertragung sowie Teilnehmer für ein Derartiges Netzwerk**
Method for operating a network with wireless transmission of data and subscriber for said network
Procédé pour faire fonctionner un réseau à transmission de données sans fil et abonne a ce type de réseau

(30) Priorität: 23.05.2001 DE 10125387
(43) Veröffentlichungstag der Anmeldung: 25.02.2004
(73) Patentinhaber: SIEMENS AKTIENGESELLSCHAFT, 80333 München (DE)
(72) Erfinder: HAMMER, Gerhard, 76777 Neupotz (DE); RÖTHER, Klaus, 76297 Stutensee (DE)
(86) Internationale Anmeldenummer: PCT/DE2002/001849
(87) Internationale Veröffentlichungsnummer: WO 2002/096031

(56) Entgegenhaltungen:
- US-A- 6 088 591
- HAEHNICHE J ET AL: "Radio communication in automation systems: the R-fieldbus approach" FACTORY COMMUNICATION SYSTEMS, 2000. PROCEEDINGS. 2000 IEEE INTERNATIONAL WORKSHOP ON PORTO, PORTUGAL 6-8 SEPT. 2000, PISCATAWAY, NJ, USA,IEEE, US, 6. September 2000 (2000-09-06), Seiten 319-326, XP010521825 ISBN: 0-7803-6500-3
- LUTTENBACHER J: "PROFIBUS WIRELESS - IMPLEMENTIERUNGSERFAHRUNGEN" VDI BERICHTE, DUESSELDORF, DE, Nr. 1580, 2000, Seiten 117-127, XP008011478 ISSN: 0083-5560

## Beschreibung

Die Erfindung betrifft ein Verfahren zum Betreiben eines Netzwerks mit drahtloser Datenübertragung nach dem Oberbegriff des Anspruchs 1 sowie einen Teilnehmer für ein derartiges Netzwerk nach dem Oberbegriff des Anspruchs 6.

Aus der US-PS 6 088 591 ist bereits ein Netzwerk mit drahtloser Datenübertragung zwischen mehreren Teilnehmern bekannt, die sich an einem festen Ort befinden können, jedoch auch in der Lage sind, sich innerhalb des Netzwerks zu bewegen. Das Netzwerk weist mehrere Funkzellen auf, in denen jeweils zumindest eine Basisstation zur drahtlosen Datenübertragung mit in der Funkzelle befindlichen Teilnehmern angeordnet ist. Damit sich die Funksignale in einander benachbarten Funkzellen, die sich teilweise überlappen, nicht gegenseitig stören, werden zumindest in benachbarten Funkzellen jeweils verschiedene Kanäle zur drahtlosen Datenübertragung genutzt. Als beispielhafte Möglichkeiten zur Trennung verschiedener Übertragungskanäle seien Frequency Hopping Spread Spectrum (FHSS), Code Division Multiple Access (CDMA), Frequency Division Multiple Access (FDMA) und Time Division Multiple Access (TDMA) genannt. Die Basisstationen verschiedener Funkzellen sind über einen gemeinsamen Übertragungskanal miteinander verbunden. Dieser Übertragungskanal kann beispielsweise durch einen Bus mit drahtgebundener Datenübertragung oder durch eine Funkverbindung realisiert werden.

Wenn sich ein über Funk angekoppelter Teilnehmer von einer Funkzelle in eine benachbarte bewegt, ist ein Übergabeverfahren von einer Zelle zur anderen erforderlich. Die mobilen Teilnehmer bewerten die Signalqualität und wechseln je nach Ergebnis der Bewertung den Übertragungskanal, um jeweils auf dem Übertragungskanal mit den besten Übertragungseigenschaften die Kommunikation mit einer Basisstation durchzuführen. Zur Minimierung der Verzögerungszeit beim Umschalten eines mobilen Teilnehmers auf einen neuen Kanal wird in der eingangs genannten Patentschrift vorgeschlagen, dass benachbarte Basisstationen über den gemeinsamen Übertragungskanal, mit welchem sie miteinander verbunden sind, verschiedene Informationen austauschen. Eine dieser Informationen ist eine Kennzeichnung des in der jeweiligen Funkzelle verwendeten Übertragungskanals. Diese Information wird auch an die über Funk angekoppelten Teilnehmer in den Funkzellen weitergegeben. Den Teilnehmern ist somit bekannt, welche Übertragungskanäle in benachbarten Funkzellen verwendet werden, und sie müssen nur diese Übertragungskanäle auf die Qualität ihrer Übertragungseigenschaften prüfen. Zudem werden die mobilen Teilnehmer, die sich in der Funkzelle einer Basisstation befinden, durch diese Basisstation verwaltet, so dass über das Netzwerk verschickte Telegramme durch die jeweilige Basisstation zu den in der zugehörigen Funkzelle befindlichen Teilnehmern geroutet, d. h. in Abhängigkeit der im jeweiligen Telegramm enthaltenen Zieladresse weitergeleitet werden können. Das bekannte Netzwerk hat somit den Nachteil, dass zusätzlich zu den eigentlichen Nutzdaten auch organisatorische Daten zwischen den Basisstationen ausgetauscht werden müssen. Da die Basisstationen sowie die über Funk angekoppelten Teilnehmer Kenntnis über die Struktur des Netzwerks besitzen müssen, ist bei Strukturänderungen eventuell zusätzlich eine Anpassung der Konfiguration oder eine Registrierung neu angeschlossener Teilnehmer erforderlich. Damit ist ein erhöhter Aufwand bei der Implementierung des Netzwerks verbunden. Beispielsweise müssen die in den Basisstationen zum Routing von Telegrammen hinterlegten Adresstabellen der über die Basisstation erreichbaren mobilen Teilnehmer gepflegt werden.

Der Erfindung liegt die Aufgabe zugrunde, ein Verfahren zum Betreiben eines Netzwerks mit drahtloser Datenübertragung zwischen mehreren Teilnehmern zu finden sowie einen dafür geeigneten Teilnehmer zu schaffen, das bzw. der einen schnellen Wechsel zwischen verschiedenen Funkzellen bei geringer Gefahr eines Datenverlusts ermöglicht.

Zur Lösung dieser Aufgabe weist das neue Verfahren der eingangs genannten Art die im kennzeichnenden Teil des Anspruchs 1 bzw. der neue Teilnehmer die im kennzeichnenden Teil des Anspruchs 6 angegebenen Merkmale auf.

Die Erfindung hat den Vorteil, dass aufwendige An- oder Abmeldeprozeduren beim Wechsel von mobilen Teilnehmern in eine andere Funkzelle für das Verfahren nicht erforderlich sind. In den einzelnen Basisstationen muss keinerlei Liste der in der jeweiligen Zelle angemeldeten Teilnehmer geführt werden. Infolgedessen erübrigt sich auch ein Datenverkehr auf dem Übertragungskanal zur Verbindung von Basisstationen zur Pflege der Listen. Das neue Verfahren hat weiterhin den Vorteil, dass es ohne weiteres in einem Netzwerk mit einem deterministischen Zugriffsverfahren, beispielsweise nach dem Master-Slave-Prinzip, eingesetzt werden kann. Da kein langer Übergabeprozess durch zeitaufwendige An- oder Abmeldeprozeduren durchgeführt werden muss, sind alle Teilnehmer außerhalb der Testzyklen zu jedem Zeitpunkt erreichbar. Damit wird die Gefahr eines Datenverlusts reduziert. Das Verfahren ist somit auch für Netzwerke geeignet, die für zeitkritische Anwendungen vorgesehen sind, beispielsweise für einen Feldbus nach dem PROFIBUS-Standard, der zur Vernetzung von Sensoren und Aktuatoren in einer prozesstechnischen Anlage einsetzbar ist. In einem Feldbus nach PROFIBUS DP mit zyklischem Datenverkehr können die Testzyklen in den Ablauf eines Zyklus eingebunden werden.

Ein weiterer Vorteil ist darin zu sehen, dass das Verfahren durch geeignete Festlegung der vorgegebenen maximalen Zeitabstände zwischen den Testzyklen in einfacher Weise an die zeitlichen Anforderungen der jeweiligen Anwendung anpassbar ist. Beispielsweise können die Zeitabstände zwischen den Testzyklen größer gewählt werden, wenn sich die über Funk angekoppelten Teilnehmer nur langsam bewegen und sich vergleichsweise lange im Überlappungsbereich zwischen zwei benachbarten Funkzellen aufhalten.

Das Verfahren erfordert, dass die im Netzwerk befindlichen Basisstationen gleichzeitig die Testzyklen durchführen. Bei einem Netzwerk, in welchem die Basisstationen über eine synchronisierte Uhrzeit verfügen, können die Zeitpunkte für den jeweiligen Beginn der Testzyklen in einfacher Weise anhand der vorgegebenen Zeitabstände aus der Uhrzeit abgeleitet werden. Eine Ausbildung eines Teilnehmers als so genannter Mobility Master, der mit in den vorgegebenen Zeitabständen wiederkehrenden Telegrammen die Testzyklen einleitet, hat jedoch den Vorteil, dass ein bestehender Feldbus ohne weiteres um diese Art der Synchronisation erweiterbar ist und dass in einfacher Weise eine mit der zyklischen Datenübertragung des Feldbusses verträgliche Einleitung der Testzyklen erreicht werden kann. Zudem wirken sich Ungenauigkeiten der Uhrzeitsynchronisation damit nicht störend auf das Verfahren aus.

Derjenige Teilnehmer kann vorzugsweise als Mobility Master betrieben werden, der in einem Netzwerk mit einem Zugriffsverfahren nach dem Master-Slave-Prinzip die logische Masterschaft besitzt. Das hat den Vorteil, dass das Verfahren noch einfacher zu implementieren ist, da die Einleitung der Testzyklen mittels wiederkehrender Telegramme lediglich als zusätzliche Funktion im ohnehin vorhandenen Master realisiert werden kann. Ein zusätzlicher Hardwareaufwand ist dabei nicht erforderlich.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- Figur 1: ein Netzwerk mit drahtloser Datenübertragung zwischen mehreren Teilnehmern und
- Figur 2: ein Zeitdiagramm eines Testzyklus.

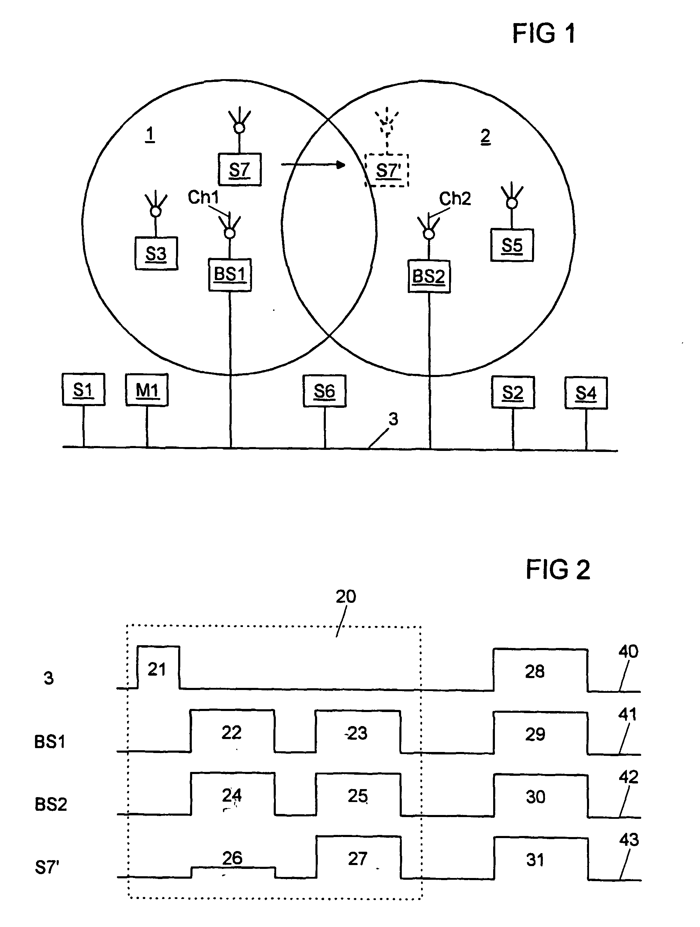

Das in Figur 1 dargestellte Netzwerk weist zwei Funkzellen 1 und 2 auf, die einander benachbart sind und sich teilweise überlappen. In jeder Funkzelle befindet sich eine Basisstation BS1 bzw. BS2. Die Basisstationen BS1 und BS2 sind durch einen gemeinsamen Übertragungskanal 3, der hier als Feldbus nach dem PROFIBUS DP-Standard ausgebildet ist, miteinander verbunden. An den Feldbus ist eine speicherprogrammierbare Steuerung als Master M1 angeschlossen, der zusätzlich zu seiner Eigenschaft als logischer Master innerhalb des PROFIBUS DP auch die Funktion eines Mobility Masters innehat. Weitere Teilnehmer am Feldbus 3 sind ein Durchflussmessumformer als Slave S1, ein Regelventil als Slave S6, ein Druckmessumformer als Slave S2 und ein Füllstandsmessumformer als Slave S4. Messwerte und Stellgrößen werden zwischen diesen Feldgeräten und der speicherprogrammierbaren Steuerung in äquidistanten Zyklen übertragen. Diese Art der Übertragung ist beispielsweise in Abtastregelungen vorteilhaft. Durch den Durchflussmessumformer zur Erfassung eines Istwerts, durch die speicherprogrammierbare Steuerung zur Regelung und durch das Regelventil zur Verarbeitung einer Stellgröße wird eine über den Feldbus 3 kommunizierende Durchflussregeleinrichtung in einer automatisierungstechnischen Anlage realisiert. An diesem Beispiel wird deutlich, dass es bei einem Einsatz eines Netzwerks in der Automatisierungstechnik von erheblichem Vorteil ist, wenn den einzelnen Teilnehmern des Netzwerks der Zugriff auf das Übertragungsmedium nach einem deterministischen Verfahren zugeteilt wird.

Zusätzlich sind drei Transportmittel über Funk angekoppelt, die innerhalb des Netzwerks als Slave S3, S5 bzw. S7 betrieben werden. Zur Verdeutlichung des Übergabeverfahrens ist in Figur 1 eine Bewegung des Slaves S7 von der Funkzelle 1 in die benachbarte Funkzelle 2 angedeutet. Zu Beginn dieser Bewegung befindet sich der Slave S7 in der Funkzelle 1, wie es in Figur 1 mit durchgezogenen Linien dargestellt ist. Daten werden dort zwischen der Basisstation BS1 und dem Slave S7 über einen Kanal Ch1 übertragen. Die Position des Slaves S7 in der Funkzelle 2, die er nach der Bewegung erreicht, ist mit durchbrochenen Linien angedeutet. Zur Unterscheidung der beiden Positionen ist derselbe Slave dort mit dem Bezugszeichen S7' versehen. In der Funkzelle 2 werden die Daten zwischen dem Slave S7' und der Basisstation BS2 über einen Kanal Ch2 ausgetauscht. Derselbe Kanal wird auch vom Slave S5 genutzt. Der Slave S3, der sich in der Funkzelle 1 befindet, ist über den Kanal Ch1 an die Basisstation BS1 angekoppelt.

Anhand Figur 2 soll im Folgenden das beim Wechsel von einer Funkzelle zu einer anderen genutzte Übergabeverfahren näher erläutert werden. Durch einen Verlauf 40 ist der Telegrammverkehr auf dem Feldbus 3, durch einen Verlauf 41 der Sendebetrieb der Basisstation BS1, durch einen Verlauf 42 der Sendebetrieb der Basisstation BS2 und durch einen Verlauf 43 qualitativ der Pegel eines Funkempfangssignals des Slaves S7' angedeutet. Bei einem Low-Pegel im Verlauf 40 werden auf dem Feldbus 3 keine Telegramme übertragen, während bei einem High-Pegel ein Telegrammverkehr vorhanden ist. Ein Low-Pegel der Verläufe 41 und 42 zeigt an, dass die Basisstationen BS1 bzw. BS2 keine Funksignale aussenden, während High-Pegel jeweils Sendeaktivitäten kennzeichnen. Schließlich zeigt der Verlauf 43 in qualitativer Weise die Stärke des Funkempfangssignals an; je niedriger der Pegel, desto geringer die Signalstärke.

In die zyklische Datenübertragung über den PROFIBUS DP werden systemverträgliche Testzyklen eingefügt. Figur 2 zeigt den prinzipiellen Ablauf eines Testzyklus 20. Der Testzyklus wird durch ein Telegramm 21 eingeleitet, das der Mobility Master, hier der Master M1 (Figur 1), wiederkehrend in vorgegebenen maximalen Zeitabständen an die Basisstationen BS1 und BS2 (Figur 1) schickt. Durch den Empfang des Telegramms 21 werden die Basisstationen BS1 und BS2 dazu veranlasst, Testsignale 22, 23, 24 und 25 in den jeweiligen Funkzellen 1 bzw. 2 auszusenden. Von jeder Basisstation werden in einem Testzyklus so viele Testsignale ausgesendet, wie in dem Netzwerk Übertragungskanäle zur Ankopplung mobiler Teilnehmer verwendet werden.

Es würde alternativ dazu jedoch genügen, die Zahl der ausgesendeten Testsignale auf die Gesamtzahl der Übertragungskanäle zu beschränken, die in einer Funkzelle und den zu dieser Funkzelle benachbarten Funkzellen genutzt werden, die sich mit dieser Funkzelle überlappen.

Um zu gewährleisten, dass die beiden Basisstationen BS1 und BS2 nicht gleichzeitig auf demselben Übertragungskanal senden, beginnen beide mit dem Aussenden eines Testsignals 22 bzw. 24 auf dem eigenen Übertragungskanal Ch1 bzw. Ch2. Danach werden die Übertragungskanäle in einer für alle Basisstationen am Netzwerk einheitlichen Reihenfolge gewechselt und jeweils erneut ein Testsignal ausgesendet. Auf das Testsignal 22 der Basisstation BS1 folgt somit ein Testsignal 23 auf dem Übertragungskanal Ch2. Das Testsignal 25 der Basisstation BS2 wird dagegen nun auf dem Übertragungskanal Ch1 gesendet. Auf diese Weise sendet jede Basisstation während eines Testzyklus jeweils einmal mit dem Übertragungskanal aller im Netzwerk vorhandener Basisstationen. Der Slave S7' empfängt die Testsignale auf dem bisher eingestellten Übertragungskanal Chl, den er während des gesamten Testzyklus beibehält. Die Feldstärke eines Empfangssignals 26, das durch das von der Basisstation BS1 gesendete Testsignal 22 hervorgerufen wird, ist kleiner als die Feldstärke eines Empfangssignals 27, das von dem Testsignal 25 der Basisstation BS2 herrührt. Der Slave S7' stellt somit fest, dass die Signale der Basisstation BS2, welcher der Übertragungskanal Ch2 zugeordnet ist, mit einer besseren Übertragungsqualität empfangen werden können. Somit wird der Übertragungskanal Ch2 als derjenige mit den besten Übertragungseigenschaften ermittelt und der Slave S7' schaltet seine Schnittstelle zur Funkkommunikation auf den Übertragungskanal Ch2 um. Nach dem Ende des Testzyklus 20 werden wieder Telegramme des Nutzdatenverkehrs auf dem Feldbus 3 übertragen. In Figur 2 ist dazu ein Feldbustelegramm 28 angedeutet, das von der Basisstation BS1 auf dem Übertragungskanal Ch1 als Sendeaktivität 29 und von der Basisstation BS2 auf dem Übertragungskanal Ch2 als Sendeaktivität 30 zu den in der jeweiligen Funkzelle befindlichen mobilen Teilnehmern gesendet wird. Der Slave S7', der sich nach der Bewegung in der Funkzelle 2 befindet, erhält das Telegramm mit einem Empfangssignal 31 auf dem Übertragungskanal Ch2, der die besten Übertragungseigenschaften für den Slave S7' besitzt.

Alternativ zu dem in Figur 2 dargestellten Verfahren können die Basisstationen BS1 und BS2 den jeweiligen Übertragungskanal Ch1 bzw. Ch2 im Testzyklus beibehalten und die über Funk angekoppelten Slaves S3, S5 und S7 jeweils ihren Empfangskanal umschalten. Das hat den Vorteil, dass geringere zeitliche Anforderungen an das Aussenden der Testsignale innerhalb des Testzyklus gestellt werden.

Mit den Testsignalen können Informationen über Charakteristika der Übertragungskanäle und den zeitlichen Ablauf des Testzyklus, beispielsweise der Anfangs- und Endzeitpunkt, an die über Funk angekoppelten Teilnehmer übergeben werden.

In dem gezeigten Ausführungsbeispiel wurde ein Feldbus als gemeinsamer Übertragungskanal verwendet, über welchen die Basisstationen miteinander verbunden sind. Abweichend hiervon kann der Feldbus selbst mehrere über Funk verbundene Segmente enthalten, wobei unter dem Begriff Segment ein Feldbusabschnitt mit drahtgebundener Datenübertragung verstanden wird.

## Patentansprüche

1. Verfahren zum Betreiben eines Netzwerks mit drahtloser Datenübertragung zwischen mehreren Teilnehmern, das zumindest zwei Funkzellen (1, 2) aufweist, die sich zumindest teilweise überlappen und in denen zur Datenübertragung jeweils verschiedene Kanäle (Ch1, Ch2) genutzt werden, wobei jede Funkzelle (1, 2) zumindest eine Basisstation (BS1, BS2) aufweist, wobei Basisstationen verschiedener Funkzellen jeweils über zumindest einen gemeinsamen Übertragungskanal (3) miteinander verbunden sind und wobei durch die Basisstationen Testsignale (22 ... 25) in die jeweiligen Funkzellen ausgesendet werden, anhand derer über Funk angekoppelte Teilnehmer (S3, S5, S7, S7') den Übertragungskanal mit den besten Übertragungseigenschaften ermitteln, **dadurch gekennzeichnet, dass** in vorgegebenen maximalen Zeitabständen durch die Basisstationen gleichzeitig Testzyklen (20) einer vorgegebenen maximalen Dauer abgearbeitet werden, wobei in den Testzyklen durch die Basisstationen die Testsignale (22...25) ausgesendet werden.

2. Verfahren nach Anspruch 1, **dadurch gekennzeichnet, dass** zumindest ein Teilnehmer (M1) als so genannter Mobility Master mit in den vorgegebenen Zeitabständen wiederkehrenden Telegrammen (21) die Testzyklen (20) einleitet.

3. Verfahren nach Anspruch 2, **dadurch gekennzeichnet, dass** derjenige Teilnehmer als Mobility Master betrieben wird, der in einem Netzwerk mit einem Zugriffsverfahren nach dem Master-Slave-Prinzip die logische Masterschaft besitzt.

4. Verfahren nach einem der Ansprüche 1 bis 3, **dadurch gekennzeichnet,**
**dass** die Basisstationen (BS1, BS2) in einem Testzyklus jeweils zumindest ein Testsignal auf dem der jeweiligen Basisstation zugewiesenen Übertragungskanal senden, dass über Funk angekoppelte Teilnehmer in dem Testzyklus nacheinander alle Übertragungskanäle zum Empfang der Testsignale einstellen und dass die über Funk angekoppelten Teilnehmer jeweils denjenigen Übertragungskanal mit den besten Übertragungseigenschaften zur Datenübertragung nach dem Testzyklus beibehalten.

5. Verfahren nach einem der Ansprüche 1 bis 3, **dadurch gekennzeichnet,**
**dass** die Basisstationen (BS1, BS2) in einem Testzyklus (20) nacheinander jeweils Testsignale (22 ... 25) auf den verschiedenen Übertragungskanälen (Ch1, Ch2) senden, wobei sichergestellt wird, dass zwei Basisstationen nicht gleichzeitig auf demselben Übertragungskanal senden,
**dass** die über Funk angekoppelten Teilnehmer (S7') in dem Testzyklus (20) die Testsignale auf einem für die Dauer des Testzyklus fest eingestellten Übertragungskanal empfangen und die Basisstation ermitteln, deren Testsignal auf diesem Übertragungskanal mit den besten Ubertragungseigenschaften empfangen wurde, und
**dass** die über Funk angekoppelten Teilnehmer den Übertragungskanal der ermittelten Basisstation als denjenigen mit den besten Übertragungseigenschaften zur Datenübertragung nach dem Testzyklus beibehalten.

6. Teilnehmer (53, 55, 57, 57') für ein Netzwerk, das nach einem Verfahren nach einem der Ansprüche 1 bis 5 betrieben wird, wobei der Teilnehmer dazu ausgebildet ist, anhand von Testsignalen (22...25), die durch die Basisstationen (B51, B52) ausgesendet werden, den Übertragungskanal mit den besten Übertragungseigenschaften ermittelt, **dadurch gekennzeichnet, dass** in vorgegebenen maximalen Zeitabständen durch die Basisstationen gleichzeitig Testzyklen (20) einer vorgegebenen maximalen Dauer abgearbeitet werden, wobei in den Testzyklen durch die Basisstationen die Testsignale ausgesendet werden.

## Claims

1. Method for operating a network using wireless data transmission between a plurality of users, which network has at least two radio cells (1, 2) which at least partly overlap and in which different channels (Ch1, Ch2) are used for data transmission in each case, with each radio cell (1, 2) having at least one base station (BS1, BS2), with base stations of different radio cells being interconnected in each case via at least one common communication channel (3) and with test signals (22...25) being transmitted by the base stations into the respective radio cells, users (S3, S5, S7, S7') connected via radio determining, on the basis of said test signals, the communication channel with the best transmission characteristics, **characterised in that** test cycles (20) of a predefined maximum duration are processed simultaneously at predefined maximum time intervals by the base stations, the test signals (22...25) being transmitted by the base stations in the test cycles.

2. Method according to claim 1, **characterised in that** at least one user (M1), acting as what is referred to as a mobility master, initiates the test cycles (20) by means of messages (21) recurring in the predefined time intervals.

3. Method according to claim 2, **characterised in that** the user that possesses the logical mastership in a network using an access method based on the master-slave principle is operated as the mobility master.

4. Method according to one of the claims 1 to 3, **characterised in that**
the base stations (BS1, BS2) in each case send at least one test signal in a test cycle on the communication channel assigned to the respective base station, that users connected via radio successively set all the communication channels for reception of the test signals during the test cycle and that the users connected via radio retain in each case that communication channel having the best transmission characteristics for the transmission of data after the test cycle.

5. Method according to one of the claims 1 to 3, **characterised in that**
the base stations (BS1, BS2) in each case successively transmit test signals (22...25) on the different communication channels (Ch1, Ch2) in a test cycle, it being ensured that no two base stations transmit simultaneously on the same communication channel,
that the users (S7') connected via radio receive the test signals in the test cycle (20) on a communication channel that is fixed for the duration of the test cycle and determine the base station whose test signal has been received with the best transmission characteristics on said communication channel, and
that the users connected via radio retain the communication channel of the determined base station as the one with the best transmission characteristics for the transmission of data after the test cycle.

6. User (S3, S5, S7, S7') for a network that is operated according to a method as claimed in one of the claims 1 to 5, wherein the user is embodied so as to determine, on the basis of test signals (22...25) transmitted by the base stations (BS1, BS2), the communication channel having the best transmission characteristics, **characterised in that** test cycles (20) having a predefined maximum duration are processed simultaneously by the base stations at predefined maximum time intervals, the test signals being transmitted by the base stations in the test cycles.

## Revendications

1. Procédé pour faire fonctionner un réseau à transmission de données sans fil entre plusieurs abonnés qui comporte au moins deux cellules (1, 2) radio qui se chevauchent au moins en partie et dans lesquelles il est utilisé pour la transmission de données, respectivement, des canaux (Ch1, Ch2) différents, chaque cellule (1, 2) radio ayant au moins un poste (BS1, BS2) de base, des postes de base de cellules radio différentes étant reliés entre eux, respectivement, par au moins un canal (3) commun de transmission et des signaux (22, ..., 25) de test étant émis par les postes de base dans les cellules radio respectives, signaux au moyen desquels des abonnés (S3, S5, S7, S7') couplés par radio déterminent le canal de transmission ayant les propriétés de transmission les meilleures, **caractérisé en ce que**, dans des intervalles de temps maximums prescrits, il est élaboré par les postes de base, simultanément, des cycles (20) de test d'une durée maximum prescrite, les signaux (22, ..., 25) de test étant émis dans les cycles de test par les postes de base.

2. Procédé suivant la revendication 1, **caractérisé en ce qu'**au moins un abonné (M1), en tant que ce que l'on appelle Mobility Master, fait commencer les cycles (20) de test par des télégrammes (21) se répétant dans les intervalles de temps prescrits.

3. Procédé suivant la revendication 2, **caractérisé en ce que** l'abonné, qui fonctionne en tant que Mobility Master, possède, dans un réseau ayant un procédé d'accès suivant le principe maître-esclave, la maîtrise logique.

4. Procédé suivant l'une des revendications 1 à 3, **caractérisé en ce que** les postes (BS1, BS2) de base émettent dans un cycle de test, respectivement, au moins un signal de test sur le canal de transmission affecté au poste de base respectif, **en ce que** des abonnés couplés par radio règlent dans le cycle de test l'un après l'autre tous les canaux de transmission pour la réception des signaux de test et **en ce que** les abonnés couplés par radio conservent, respectivement, le canal de transmission ayant les meilleures propriétés de transmission pour la transmission de données après le cycle de test.

5. Procédé suivant l'une des revendications 1 à 3,
**caractérisé**
**en ce que** les postes (BS1, BS2) de base, les uns après les autres, envoient, respectivement des signaux (22, ..., 25) de test sur les divers canaux (Ch1, Ch2) de transmission en assurant que deux postes de base n'émettent pas simultanément sur le même canal de transmission,
**en ce que** les abonnés (S7') couplés par radio reçoivent dans le cycle (20) de test les signaux de test sur un canal de transmission fixé pour la durée du cycle de test et déterminent le poste de base dont le signal de test a été reçu sur ce canal de transmission en ayant les meilleures propriétés de transmission, et
**en ce que** les abonnés couplés par radio conservent le canal de transmission du poste de base déterminé comme celui ayant les meilleures propriétés de transmission pour la transmission de données après le cycle de test.

6. Abonné (S3, S5, S7, S7') d'un réseau qui fonctionne suivant un procédé selon l'une des revendications 1 à 5, dans lequel l'abonné est constitué de façon à déterminer au moyen de signaux (22, ..., 25) de test qui sont émis par les postes (BS1, BS2) de base, le canal de transmission ayant les meilleures propriétés de transmission, **caractérisé en ce qu'**il est élaboré dans des intervalles de temps maximums prescrits par les postes de base simultanément des cycles (20) de test d'une durée maximum prescrite, les signaux de test étant émis par les postes de base dans les cycles de test.
